# EUROPEAN PATENT SPECIFICATION

(11) **EP 3 212 439 B1**
(45) Date of publication and mention of the grant of the patent: **05.12.2018**
(21) Application number: 14796641.0
(22) Date of filing: 28.10.2014
(51) Int. Cl.: B60C 9/00

(54) **AIRCRAFT TIRE**
FLUGZEUGREIFEN
PNEU D'AVION

(43) Date of publication of application: 06.09.2017
(73) Proprietor: Compagnie Générale des Etablissements Michelin, 63000 Clermont-Ferrand (FR)
(72) Inventor: CRESS, Ronald, Greenville, South Carolina 29605 (US); SCHOENMAKER, Jason John, Greenville, South Carolina 29605 (US); MAUCK, Shannon, Martell, Greenville, South Carolina 29605 (US); KEEFE, Brian, Greenville, SC 29605 (US); DAVIS, Wayne, Greenville, SC 29605 (US)
(74) Representative: Casalonga
(86) International application number: PCT/US2014/062642
(87) International publication number: WO 2016/068881

(56) References cited:
- EP-A1- 1 800 902
- EP-A2- 1 800 901

## Description

### FIELD OF THE INVENTION

The subject matter of the present disclosure relates generally to a pneumatic aircraft tire having certain reinforcements in the crown portion of the tire.

### BACKGROUND OF THE INVENTION

Tires suitable for use on aircraft must be capable of performing under high speeds and large loads. Preferably, aircraft tires should also be able to endure the wear conditions associated with repeated taxiing, take off, and landing. Such tires must also be manufactured under strict limitations on burst pressure, size, and weight that are necessitated by their use and storage on the aircraft.

Aircraft tires are typically inflated to relatively high inflation pressures such as e.g., 12 bar or greater. Such high inflation pressures and conventional constructions for the crown portion of the tire have typically provided very rounded profiles as viewed along a meridian plane. These rounded profiles, which include a rounded tread portion, tend to provide undesirable tread wear performance because of e.g., poor contact pressure distribution.

Difficulties are encountered when attempting to flatten the crown portion of an aircraft tire so to improve wear. For example, adding additional material to the crown portion to flatten the profile can unacceptably increase the size and mass of the tire. Removing materials in other locations in order to compensate may help reduce size and mass but may e.g., decrease burst pressure below the minimum required for aircraft use. Specialized materials such as cords constructed from aramids can be used for increased strength. However, these types of cords tend to have poor adhesion properties with the rubbers typically used in constructing the tread portion of the tire. These materials are also known to create localized tension differences between various materials in the crown portion of the tire during the high deflection and high speed applications associated with aircraft tires. Such localized tension differences further increase the wear problems.

EP 1800901 relates to a radial aircraft tire having radial carcass reinforcement including at least one ply layer on strip reinforced by cords oriented at an angle between zero degrees and thirty five degrees and having what is referenced as merged cords.

Accordingly, a tire particularly suited for aircraft applications would be useful. More particularly, a tire having a flatter crown portion that can provide improved tread wear would be beneficial. Such a tire that can meet the mass and size limitations typically associated with aircraft tires while also having a burst pressure that can withstand the stresses associated with taxiing and high speed take-offs and landings would be particularly useful. Such a tire that can also reduce the localized tension differences and, in some embodiments, provide a tire with less mass would also be very beneficial.

### SUMMARY OF THE INVENTION

The present invention provides an aircraft tire having improved wear properties. The tire includes a belt reinforcement structure that provides a flatter crown and reduces localized tensions. The belt reinforcement structure includes at least two hybrid belt plies having free ends that are positioned radially inward of at least one non-hybrid belt ply. The hybrid belt plies allow for reductions in the overall mass of the tire and improved thermal properties while still meeting requirements for burst pressure and size for aircraft tires. Additional objects and advantages of the invention will be set forth in part in the following description, or may be apparent from the description, or may be learned through practice of the invention.

In one exemplary embodiment of the present invention, an aircraft tire is provided that defines radial and axial directions. The tire includes a pair of opposing bead portions and a pair of opposing sidewall portions, with each sidewall portion connected to one of the respective bead portions. A crown portion extends axially between and connects the opposing sidewall portions. The crown portion includes a tread portion. At least two body plies extend between the bead portions and through the crown portion and opposing sidewall portions. A belt reinforcement structure is positioned in the crown portion at a position radially inward of the tread portion and radially outward of the body plies.

For this embodiment, the belt reinforcement structure includes at least two hybrid belt plies located in the crown portion, positioned radially adjacent to the at least two body plies, and radially inward of any other belt ply in the crown portion. Each hybrid belt ply has a width along the axial direction extending between opposing free ends. Each hybrid belt ply includes cord elements extending parallel to each other within the hybrid belt ply and crossing from one hybrid belt ply to the next hybrid belt ply. The cord elements of the hybrid belt plies form an angle in the range of 18 degrees to 35 degrees from an equatorial plane of the tire. The cord elements include a combination of aliphatic polyamide yarns and aromatic polyamide yarns twisted together.

For this exemplary embodiment, the belt reinforcement structure also includes at least one non-hybrid belt ply positioned radially outward of the at least two hybrid belt plies and having a width along the axial direction that is greater than the width along the axial direction of the at least two hybrid belt plies, the at least one non-hybrid belt ply having cord elements including aliphatic polyamide yarns.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a cross-sectional view of an exemplary embodiment of a tire of the present invention. The cross-section is taken along a meridian plane of the tire.
FIG. 2 is a magnified cross-sectional view of FIG. 1 along one side of the equatorial plane (EP) of the exemplary tire, it being understood that the construction of the tire is substantially symmetrical about the equatorial plane.
FIG. 3 is a magnified cross-sectional view along one side of the equatorial plane of another exemplary embodiment of a tire of the present invention, it being understood that the construction of the tire is substantially symmetrical about the equatorial plane.
FIGS. 4 and 5 are schematic diagrams illustrating certain geometric details of exemplary embodiments of the present invention.
FIG. 6 is a cross-sectional view of an exemplary cord of the present invention.
FIG. 7 is a plot of certain data as described herein.

### DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

As used herein, the following definitions apply:

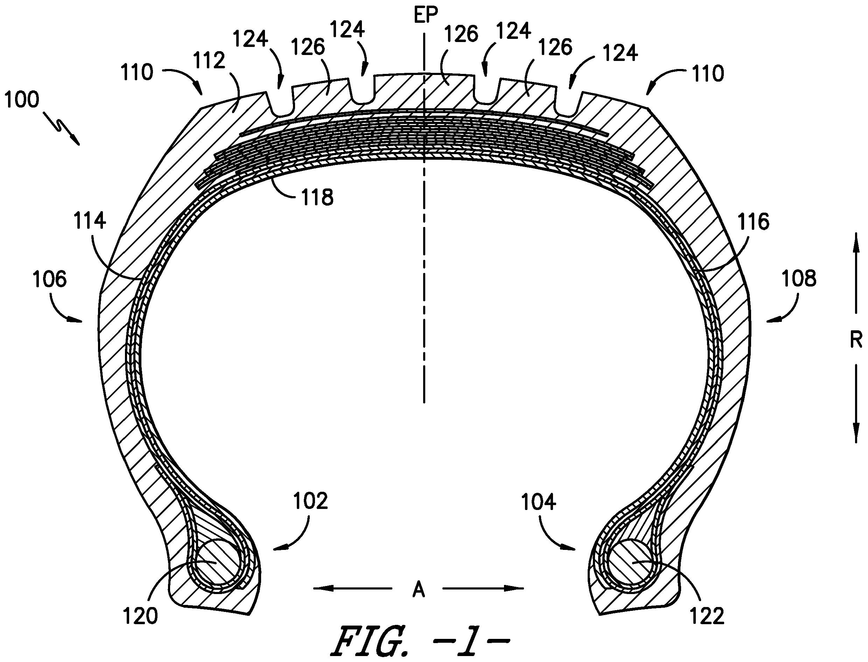

"Meridian plane" is a plane within which lies the axis of rotation of the tire. FIGS. 1, 2, and 3 are all cross-sections of exemplary tires of the present invention taken along a meridian plane.

The "center line" (C/L) of the tire is a line that bisects the tire, as viewed in the meridian plane, into two halves.

"Equatorial plane" is a plane perpendicular to the meridian plane that bisects the tire along its center line (C/L). In FIGS. 1, 2, and 3, the equatorial plane is designated with EP.

The "crown portion" of the tire is the portion that, as viewed along a meridian plane of the tire, extends along the axial direction A (which is the direction parallel to the axis of rotation of the tire) between the sidewall portions of the tire and includes the tread and components positioned radially inward of the tread.

The "radial direction" is perpendicular to the axis of rotation of the tire. "Radially outward" means along a radial direction away from the axis of rotation whereas "radially inward" means along a direction towards the axis of rotation.

"Body ply" or "carcass" or "carcass ply" is a ply that, as viewed along a meridian plane of the tire, extends between and from the bead portions on opposing sides of the tire, through the opposing sidewall portions, and across the crown portion of the tire. As used herein, a body ply has reinforcements such as e.g., cords that are at an angle of 10 degrees or less from the meridian plane unless a lesser angle is specified.

"Belt ply" is a ply that, as viewed along a meridian plane of the tire, is located primarily in the crown portion, radially inward of the tread portion, and radially outward of the body ply or plies. A belt ply does not extend past shoulder portions of the tire.

Burst pressure can be determined by a burst test in which a tire is filled with water to rated pressure such as the maximum pressure noted on the sidewall. The pressure is maintained for a time period sufficient to determine that the tire will not rupture. The pressure is then increased to a higher pressure and maintained for a time period sufficient to determine that the tire will not rupture. The process is repeated until reaching the pressure at which the tire ruptures or bursts - denoted as the burst pressure.

The use of terms such as belt, bead, and/or ply herein and in the description and claims that follow does not limit the present invention to tires constructed from semi-finished products or tires formed from an intermediate that must be changed from a flat profile to a profile in the form of a torus.

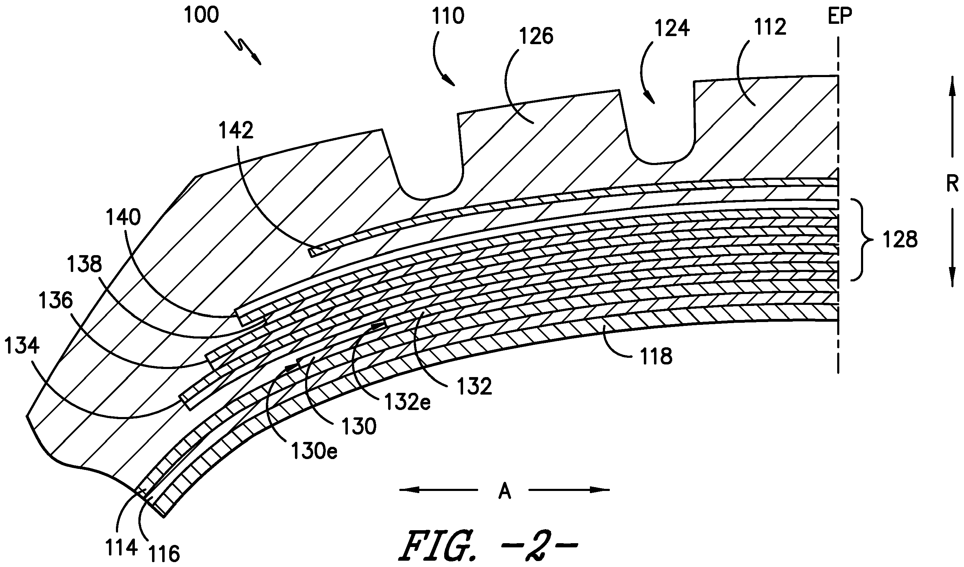

An exemplary embodiment of a tire 100 of the present invention is shown in a cross-sectional view along the meridian plane in FIGS. 1 and 2 of which FIG. 2 is a more magnified view of one side of the cross-sectional view of FIG. 1. Although a particular shape is illustrated by way of example, the present invention is not limited to only the overall shape shown in the figures. Tire 100 includes a pair of opposing bead portions 102 and 104 that are opposing in the sense of being on opposite sides of the equatorial plane EP. Bead portions 102 and 104 include bead cores 120 and 122, respectively, which may be constructed e.g., of a plurality of metal cords or other relatively inextensible materials wrapped about the axis of rotation in the form of a ring or hoop. Bead portions 102 and 104 have a shape and construction configured for seating tire 100 onto a rim.

Tire 100 includes a pair of opposing sidewall portions 106 and 108 positioned about equatorial plane EP. Each sidewall portion 106 and 108 is connected with a respective bead portion 102 and 104, respectively. Each sidewall portion 106 and 108 extends overall along radial direction R. Sidewall portions 106 and 108 include one or more rubber materials to protect body plies 114 and 116.

A crown portion 110 extends along axial direction A between, and connected to, opposing sidewall portions 106 and 108. Crown portion 110 includes a tread portion 112. For this exemplary embodiment, tread portion 112 includes a plurality of ribs 126 separated by grooves 124. The present invention is not limited to the particular shape, thickness, or other details shown for tread portion 112 and, instead, includes other treads having different features as well. An inner liner 118 extends along the interior of tire 100. Inner liner 118 provides an air impermeable layer to help maintain gas pressure when tire 100 is mounted onto a rim and inflated.

For this exemplary embodiment, tire 100 includes at least two body plies 114 and 116 that extend from opposing bead portions 102 and 104, through opposing sidewall portions 106 and 108, and through crown portion 110. While tire 100 may have more than two body plies, at least two body plies 114 and 116 are present. Body plies 114 and 116 are each shown wrapped around, or with ends turned radially outward of, bead cores 120 and 122. However, the present invention includes other constructions where body plies 114 and 116 extend into bead portions 102 and 104 without each necessarily wrapping about bead cores 120 and 122.

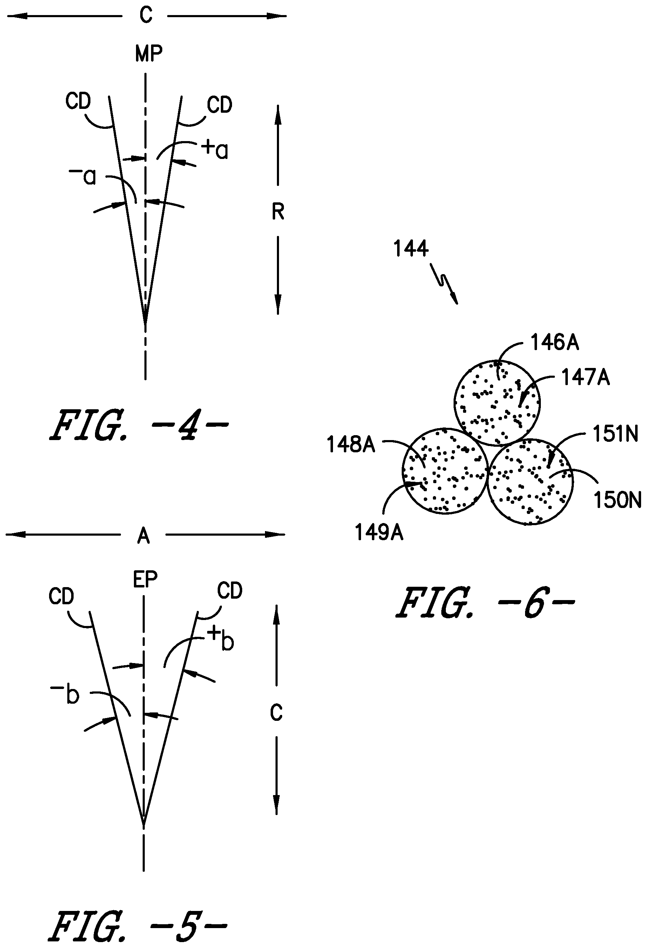

In certain embodiments, body plies 114 and 116 each include cord elements CD formed from aliphatic polyamide yarns. In still other embodiments, body plies 114 and 116 each include cord elements CD formed from aliphatic polyamide yarns and do not include aromatic polyamide yarns. As shown in FIG. 4, along the sidewall portions 106 and 108 the cord elements CD of body plies 114 and 116 extend along radial direction R at an angle of either +α or -α from the meridian plane MP. In certain exemplary embodiments, angle α has an absolute value of two degrees or less.

Returning to FIGS. 1 and 2, tire 100 includes a belt reinforcement structure 128 (FIG. 2) that extends around the circumferential direction C of the tire and is positioned in crown portion 110. Belt reinforcement structure 128 is located radially inward of crown portion 110 and radially outward of body plies 114 and 116. For this exemplary embodiment, belt reinforcement structure 128 includes at least two hybrid belt plies 130 and 132 located in crown portion 110. Belt plies 130 and 132 are positioned radially adjacent to the body plies 114 and 116, which means that no other belt ply is positioned between belt plies 130,132 and body plies 114, 116.

Each hybrid belt ply 130 and 132 includes multiple cord elements extending parallel to each other within each respective belt ply. As shown in FIG. 5, the cord elements CD in each hybrid belt ply form an angle of either +β or -β from the equatorial plane EP. In particular embodiments, the absolute value of β for the cord elements in the hybrid belt plies 130 and 132 is in the range of 18 degrees to 35 degrees. In other particular embodiments, the absolute value of β for the cord elements in the hybrid belt plies 130 and 132 is in the range of 18 degrees to 22 degrees. In still other particular embodiments for the belt reinforcement structure 128 depicted in FIGS. 1 and 2, the absolute value of β for the cord elements in the hybrid belt plies 130 and 132 is about 20 degrees.

Within belt reinforcement structure 128, the cord elements of adjacent hybrid belt plies cross from one belt ply to the next. For example, if the cord elements in belt ply 130 are at positive angle β from the equatorial plane EP, then the cord elements in belt ply 132 are at a negative angle β from the equatorial plane EP. For exemplary embodiments where belt reinforcement structure 128 includes more than two hybrid belt plies, the angles would alternate between positive and negative values of angle β from belt ply to belt ply along the radial direction R.

The cord elements of the hybrid belt plies 130 and 132 include a combination of aliphatic polyamide yarns and aromatic polyamide yarns that are twisted together. FIG. 6 provides an example of a cord element 144 as may be included in hybrid belt plies 130 and 132. For this exemplary embodiment, cord element 144 includes yarns 146A and 148A that are each constructed from aromatic polyamide filaments 147A and 149A, respectively. By way of example, each yarn 146A or 148A may include 330 aromatic polyamide filaments 147A or 149A, respectively. Cord element 144, in this embodiment, includes yarn 150N constructed from aliphatic polyamide filaments 151N. For example, yarn 150N may include 188 aliphatic polyamide filaments 151N. Other filament counts may be used as well. Cord element 144 is twisted along its length. For example, cord element 144 may be twisted at a rate of 250 turns per meter along its length. Other constructions for hybrid belt plies using a combination of aliphatic polyamide yarns and aromatic polyamide yarns may be used as well.

As shown in FIGS. 1 and 2, hybrid belt plies 130 and 132 have a width along axial direction A between free ends 130e and 132e on opposing sides of the equatorial plane EP. Using belt ply 130 as an example, as used herein "free ends" means that, as viewed in the meridian plane, the opposing ends 130e of belt ply 130 are not enclosed or encased by any other belt ply - i.e. a line (straight or having the same curvature as belt ply 130) can be drawn from a free end 130e to the exterior of tire 100 without crossing another belt ply. Additionally, "free ends" means that ends 130e are not wrapped or turned over onto belt ply 130 and are not wrapped or turned over other belt plies in crown portion 110.

In particular embodiments, the width along axial direction A of each hybrid belt ply 130 and 132 is in the range of 45 percent to 90 percent of the corresponding width of the narrowest non-hybrid belt ply (such as e.g., belt plies 134, 136, 138, and 140) in belt reinforcement structure 128. In other particular embodiments, the width along axial direction A of each hybrid belt ply 130 and 132 is in the range of 70 percent to 90 percent of the corresponding width of the narrowest non-hybrid belt ply in belt reinforcement structure 128.

Belt reinforcement structure 128 also includes at least one non-hybrid belt ply 134 that is positioned radially outward of the hybrid belt plies 130 and 132. The non-hybrid belt ply 134 has a width along axial direction A that is greater than the width along axial direction A of belt ply 130 or belt ply 132. The non-hybrid belt ply 134 includes cord elements constructed from aliphatic polyamide yarns. For this exemplary embodiment, the non-hybrid belt ply 134 does not include cords having any aromatic polyamide yarns.

Along the circumferential direction C, the cords of non-hybrid belt ply 134 extend sinusoidally. More particularly, non-hybrid belt ply is formed by sinusoidally depositing a strip member that includes the cord elements across the width (along axial direction A) of belt ply 134. This results in a double layer appearance as shown in FIGS. 1 and 2 but creates a single, non-hybrid belt ply 134. The strip member includes the cord elements within a rubber coating. In one embodiment, the strip members form and angle of 8 to 10 degrees from the equatorial plane EP as they extend between opposing sides of crown portion 110.

For the exemplary embodiment shown in FIGS. 1 and 2, belt reinforcement structure 128 also includes non-hybrid belt plies 136 and 140. Belt plies 136 and 140 are constructed in a manner as just described for non-hybrid belt ply 134. Belt plies 136 and 140 are positioned radially outward of non-hybrid belt ply 134 and have a width along the axial direction A that is slightly less in this embodiment than non-hybrid belt ply 134 but greater than hybrid belt plies 130 and 132.

Continuing with FIGS. 1 and 2, belt reinforcement structure 128 includes a supplemental belt ply 138 that is also positioned radially outward of hybrid belt plies 130 and 132. Supplemental belt ply 138 includes a cord that is wound helicoidally about the axis of rotation. The cord of supplemental belt ply 138 includes aliphatic polyamide yarns and, in particular embodiments, does not include aromatic polyamide yarns. Referring to FIG. 5 again, the cord of supplemental ply 138 forms an angle +β or an angle -β from equatorial plane EP. In particular embodiments, angle β has an absolute value of 3 degrees or less from equatorial plane EP.

Tire 100 includes at least one protector ply 142 positioned in crown portion 110. Protector ply 142 is located radially outward of belt reinforcement structure 128 and radially inward of tread portion 112. In particular embodiments, protector ply 142 may include one or more inextensible elements (e.g., nylon or metal cables) arranged at an angle of 45 degrees. By way of example, protector ply 142 shields belt reinforcement structure 128 from punctures into crown portion 110. Protector ply 142, in particular embodiments, does not include aromatic polyamide yarns.

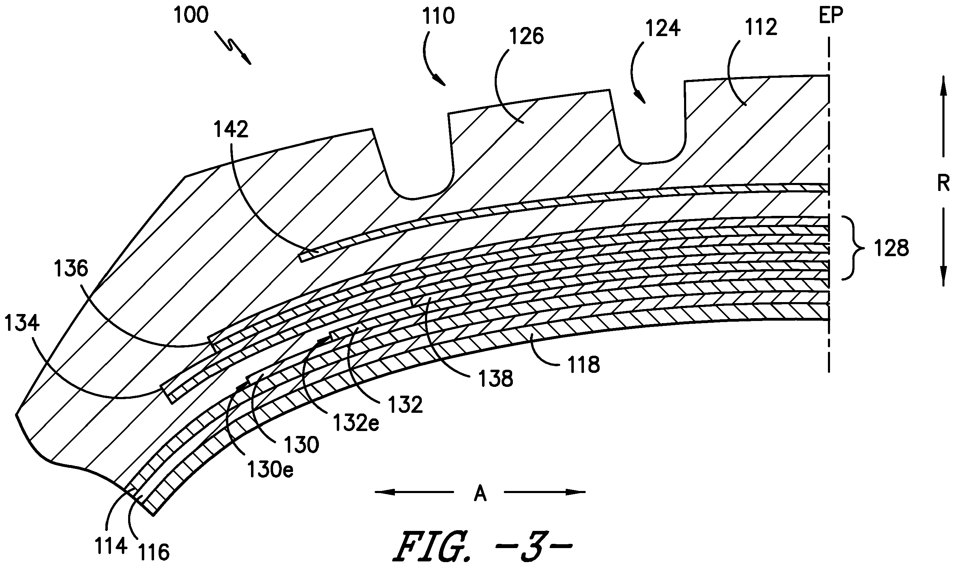

FIG. 3 provides another exemplary embodiment of a tire 100 having a belt reinforcement structure 128 arranged differently that the exemplary embodiment of FIGS. 1 and 2. For the embodiment of FIG. 3, belt reinforcement structure includes hybrid belts 130 and 132 and non-hybrid belts 134 and 136 - all constructed as previously described. As with prior embodiments, hybrid belt plies 130 and 132 are located radially inward of the non-hybrid belt plies and radially adjacent to body plies 114 and 116.

In a particular embodiment of FIG. 3, hybrid belt plies 130 and 132 have cord elements forming an angle +β or an angle -β from the equatorial plane EP having an absolute value in the range of 28 to 32 degrees. In another particular embodiment of FIG. 3, hybrid belt plies 130 and 132 have cord elements forming an angle +β or an angle -β from the equatorial plane EP having an absolute value of 30 degrees.

Supplemental belt 138 is also constructed as previously described but is located radially inward of all other non-hybrid belts 134 and 136. In this particular embodiment, supplemental belt 138 is radially adjacent to the hybrid belt plies 130 and 132. Tire 100 in FIG. 3 is otherwise constructed as described with respect to FIGS. 1 and 2.

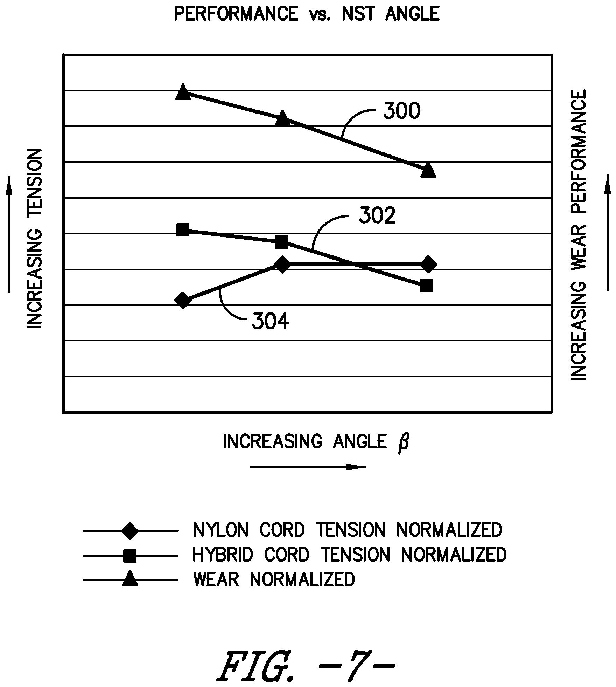

Each of the embodiments described herein provide an advanced aircraft tire having improved tread wear performance while meeting burst pressure, mass, and size requirements. Additionally, as compared to each other, the exemplary embodiment of FIGS. 1 and 2 provides additional optimization for improved tread wear performance whereas the exemplary embodiment of FIG. 3 provides additional burst pressure strength. More particularly, referring to FIG. 7, three plots 300, 302, and 304 are illustrated for three tires having similar construction but varying angles β. As shown, decreasing the absolute value of angle β of the two hybrid belt plies (e.g., 130 and 132) allows the crown portion to be further constrained and flattened thereby improving the wear performance of the tire. However, such will also increase the tension in the hybrid belt plies (e.g., 130 and 132) which then reduces the tension in the non-hybrid ply(s) (e.g., 134, 136). Conversely, increasing the absolute value of angle β of the two hybrid belt plies (e.g., 130 and 132) reduces the constraint of the crown portion, which results in a more rounded profile and reduced wear performance but also results in a more balanced distribution of the belt tensions and an improved burst pressure value.

## Claims

1. An aircraft tire (100) defining radial and axial directions, the tire comprising:
a pair of opposing bead portions (102, 104);
a pair of opposing sidewall portions (106, 108), each sidewall portion connected to one of the respective bead portions;
a crown portion (110) extending axially between and connecting the opposing sidewall portions, the crown portion including a tread portion (112);
at least two body plies (114, 116) extending between the bead portions and through the crown portion and opposing sidewall portions;
a belt reinforcement structure (128) positioned in the crown portion at a position radially inward of the tread portion and radially outward of the body plies, the belt reinforcement structure comprising:
at least two hybrid belt plies (130, 132) located in the crown portion, positioned radially adjacent to the at least two body plies, and radially inward of any other belt ply in the crown portion; each hybrid belt ply having a width along the axial direction extending between opposing free ends (130e, 132e); each hybrid belt ply comprising cord elements extending parallel to each other within the hybrid belt ply and crossing from one hybrid belt ply to the next hybrid belt ply; the cord elements of the hybrid belt plies forming an angle in the range of 18 degrees to 35 degrees from an equatorial plane of the tire; the cord elements comprising a combination of aliphatic polyamide yarns and aromatic polyamide yarns twisted together; and
at least one non-hybrid belt ply (134, 136, 140) positioned radially outward of the at least two hybrid belt plies and having a width along the axial direction that is greater than the width along the axial direction of the at least two hybrid belt plies, the at least one non-hybrid belt ply having cord elements comprising aliphatic polyamide yarns.

2. The aircraft tire (100) as in claim 1, further comprising a non-hybrid, supplemental belt ply (138) positioned radially outward of the hybrid belt plies.

3. The aircraft tire as in claim 2, wherein the non-hybrid, supplemental belt ply (138) includes a helicoidally wound cord comprising aliphatic polyamide yarns.

4. The aircraft tire (100) as in claim 3, wherein the helicoidally wound cord forms an angle of 3 degrees or less from an equatorial plane of the tire.

5. The aircraft tire (100) as in any one of claims 2 to 4, wherein the non-hybrid supplemental belt ply (138) is located radially outward of the hybrid plies (130, 132) and radially inward of the other non-hybrid plies (134, 136, 140).

6. The aircraft tire (100) of claim 5, wherein the at least one non-hybrid belt ply (134, 136, 140) consists of two plies having sinusoidally wound cord elements.

7. The aircraft tire (100) of claim 6, wherein the cord elements of the hybrid belt plies (130, 132) form an angle in the range of 28 degrees to 32 degrees from an equatorial plane of the tire.

8. The aircraft tire (100) as in any one of claims 2 to 4, wherein the at least one non-hybrid belt ply (134, 136, 140) comprises at least two plies having sinusoidally wound cord elements and wherein the non-hybrid, supplemental belt ply (138) is located radially between said two plies having sinusoidally wound cord elements.

9. The aircraft tire (100) of claim 8, wherein the cord elements of the hybrid belt plies (130, 132) form an angle in the range of 18 degrees to 22 degrees from an equatorial plane of the tire.

10. The aircraft tire (100) of any one of the preceding claims, wherein the width of each of the hybrid belt plies (130, 132) is in the range of 45 percent to 90 percent of the width of the narrowest non-hybrid belt ply.

11. The aircraft tire (100) of any one of the preceding claims, wherein the width of each of the hybrid belt plies (130, 132) is in the range of 70 percent to 90 percent of the width of the narrowest non-hybrid belt ply.

12. The aircraft tire (100) of any one of the preceding claims, further comprising at least one protector ply (142) positioned in the crown portion (110) radially outward of the belt reinforcement structure (128) and radially inward of the tread portion.

13. The aircraft tire (100) of any one of the preceding claims, wherein the at least two body plies each include cord elements comprising aliphatic polyamide yarns and do not include aromatic polyamide yarns.

14. The aircraft tire (100) as in claim 13, wherein the tire defines a meridian plane, and wherein the cord elements of the at least two body plies form an angle of two degrees or less from the meridian plane.

15. The aircraft tire (100) as in any one of the preceding claims, wherein the cord elements of the at least two hybrid belt plies comprise two yarns of aromatic polyamide filaments and one yarn of aliphatic polyamide filaments.

## Patentansprüche

1. Flugzeugreifen (100), der eine radiale und eine axiale Richtung definiert, wobei der Reifen Folgendes umfasst:
zwei gegenüberliegende Wulstabschnitte (102, 104);
zwei gegenüberliegende Seitenwandabschnitte (106, 108), wobei jeder Seitenwandabschnitt mit einem der jeweiligen Wulstabschnitte verbunden ist;
einen Kronenabschnitt (110), der sich axial zwischen den gegenüberliegenden Seitenwandabschnitten erstreckt und diese verbindet, wobei der Kronenabschnitt einen Laufflächenabschnitt (112) aufweist;
mindestens zwei Karkassenlagen (114, 116), die sich zwischen den Wulstabschnitten und durch den Kronenabschnitt und die gegenüberliegenden Seitenwandabschnitte erstrecken;
eine Gürtelverstärkungsstruktur (128), die in dem Kronenabschnitt an einer Position radial einwärts von dem Laufflächenabschnitt und radial auswärts von den Karkassenlagen positioniert ist, wobei die Gürtelverstärkungsstruktur Folgendes umfasst:
mindestens zwei hybride Gürtellagen (130, 132), die sich in dem Kronenabschnitt befinden, radial angrenzend an die mindestens zwei Karkassenlagen und radial einwärts von jeder zweiten Gürtellage in dem Kronenabschnitt positioniert sind; wobei jede hybride Gürtellage eine sich zwischen gegenüberliegenden freien Enden (130e, 132e) erstreckende Breite entlang der axialen Richtung besitzt; wobei jede hybride Gürtellage Kordelemente umfasst, die sich innerhalb der hybriden Gürtellage parallel zueinander erstrecken und von einer hybriden Gürtellage zu der nächsten hybriden Gürtellage kreuzen; wobei die Kordelemente der hybriden Gürtellagen einen Winkel im Bereich von 18 Grad bis 35 Grad zu einer Äquatorialebene des Reifens bilden; wobei die Kordelemente eine Kombination aus aliphatischen Polyamidgarnen und aromatischen Polyamidgarnen umfassen, die miteinander verdrillt sind; und
mindestens eine nicht-hybride Gürtellage (134, 136, 140), die radial auswärts von den mindestens zwei hybriden Gürtellagen positioniert ist und eine Breite entlang der axialen Richtung besitzt, die größer ist als die Breite entlang der axialen Richtung der mindestens zwei hybriden Gürtellagen, wobei mindestens eine nicht-hybride Gürtellage Kordelemente aus aliphatischen Polyamidgarnen besitzt.

2. Flugzeugreifen (100) nach Anspruch 1, ferner umfassend eine nicht-hybride, zusätzliche Gürtellage (138), die radial auswärts von den hybriden Gürtellagen positioniert ist.

3. Flugzeugreifen nach Anspruch 2, wobei die nicht-hybride, zusätzliche Gürtellage (138) einen spiralförmig gewickelten Kord aus aliphatischen Polyamidgarnen aufweist.

4. Flugzeugreifen (100) nach Anspruch 3, wobei der spiralförmig gewickelte Kord einen Winkel von 3 Grad oder weniger zu einer Äquatorialebene des Reifens bildet.

5. Flugzeugreifen (100) nach einem der Ansprüche 2 bis 4, wobei sich die nicht-hybride zusätzliche Gürtellage (138) radial auswärts von den hybriden Lagen (130, 132) und radial einwärts von den anderen nicht-hybriden Lagen (134, 136, 140) befindet.

6. Flugzeugreifen (100) nach Anspruch 5, wobei die mindestens eine nicht-hybride Gürtellage (134, 136, 140) aus zwei Lagen mit sinusförmig gewickelten Kordelementen besteht.

7. Flugzeugreifen (100) nach Anspruch 6, wobei die Kordelemente der hybriden Gürtellagen (130, 132) einen Winkel im Bereich von 28 Grad bis 32 Grad zu einer Äquatorialebene des Reifens bilden.

8. Flugzeugreifen (100) nach einem der Ansprüche 2 bis 4, wobei die mindestens eine nicht-hybride Gürtellage (134, 136, 140) mindestens zwei Lagen mit sinusförmig gewickelten Kordelementen umfasst und wobei sich die nicht-hybride, zusätzliche Gürtellage (138) radial zwischen den zwei Lagen mit sinusförmig gewickelten Kordelementen befindet.

9. Flugzeugreifen (100) nach Anspruch 8, wobei die Kordelemente der hybriden Gürtellagen (130, 132) einen Winkel im Bereich von 18 Grad bis 22 Grad zu einer Äquatorialebene des Reifens bilden.

10. Flugzeugreifen (100) nach einem der vorhergehenden Ansprüche, wobei die Breite einer jeden der hybriden Gürtellagen (130, 132) im Bereich von 45 Prozent bis 90 Prozent der Breite der schmalsten nicht-hybriden Gürtellage liegt.

11. Flugzeugreifen (100) nach einem der vorhergehenden Ansprüche, wobei die Breite einer jeden der hybriden Gürtellagen (130, 132) im Bereich von 70 Prozent bis 90 Prozent der Breite der schmalsten nicht-hybriden Gürtellage liegt.

12. Flugzeugreifen (100) nach einem der vorhergehenden Ansprüche, ferner umfassend mindestens eine Schutzlage (142), die in dem Kronenabschnitt (110) radial auswärts von der Gürtelverstärkungsstruktur (128) und radial einwärts von dem Laufflächenabschnitt positioniert ist.

13. Flugzeugreifen (100) nach einem der vorhergehenden Ansprüche, wobei die mindestens zwei Karkassenlagen jeweils Kordelemente aus aliphatischen Polyamidgarnen aufweisen und keine aromatischen Polyamidgarne aufweisen.

14. Flugzeugreifen (100) nach Anspruch 13, wobei der Reifen eine Meridianebene definiert und wobei die Kordelemente der mindestens zwei Karkassenlagen einen Winkel von 2 Grad oder weniger zu der Meridianebene bilden.

15. Flugzeugreifen (100) nach einem der vorhergehenden Ansprüche, wobei die Kordelemente der mindestens zwei hybriden Gürtellagen zwei Garne aus aromatischen Polyamidfilamenten und ein Garn aus aliphatischen Polyamidfilamenten umfassen.

## Revendications

1. Pneu d'aéronef (100) définissant des directions radiale et axiale, le pneu comprenant :
une paire de parties de talon opposées (102, 104) ;
une paire de parties de flanc opposées (106, 108), chaque partie de flanc reliée à l'une des parties de talon respectives ;
une partie de sommet (110) s'étendant axialement entre et reliant les parties de flanc opposées, la partie de sommet incluant une partie de bande de roulement (112) ;
au moins deux nappes carcasses (114, 116) s'étendant entre les parties de talon et à travers la partie de sommet et des parties de flanc opposées ;
une structure de renforcement de ceinture (128) positionnée dans la partie de sommet en une position radialement vers l'intérieur de la partie de bande de roulement et radialement vers l'extérieur des nappes carcasses, la structure de renforcement de ceinture comprenant :
au moins deux nappes de ceinture hybrides (130, 132) situées dans la partie de sommet, positionnées radialement adjacentes aux au moins deux nappes carcasses, et radialement vers l'intérieur d'une quelconque autre nappe de ceinture dans la partie de sommet ; chaque nappe de ceinture hybride ayant une largeur le long de la direction axiale s'étendant entre des extrémités libres opposées (130e, 132e) ; chaque nappe de ceinture hybride comprenant des éléments de fil câblé s'étendant parallèles entre eux dans la nappe de ceinture hybride et se croisant entre une nappe de ceinture hybride et la prochaine nappe de ceinture hybride ; les éléments de fil câblé des nappes de ceinture hybrides formant un angle dans la plage de 18 degrés à 35 degrés depuis un plan équatorial du pneu ; les éléments de fil câblé comprenant une combinaison de fils de polyamide aliphatique et des fils de polyamide aromatique tressés ensemble ; et
au moins une nappe de ceinture non hybride (134, 136, 140) positionnée radialement à l'extérieur des au moins deux nappes de ceinture hybrides et ayant une largeur le long de la direction axiale qui est plus grande que la largeur le long de la direction axiale des au moins deux nappes de ceinture hybrides, l'au moins une nappe de ceinture non hybride comportant des éléments de fil câblé comprenant des fils de polyamide aliphatique.

2. Pneu d'aéronef selon la revendication 1, comprenant en outre une nappe de ceinture non hybride supplémentaire (138) positionnée radialement à l'extérieur des nappes de ceinture hybrides.

3. Pneu d'aéronef (100) selon la revendication 2, dans lequel la nappe de ceinture non hybride supplémentaire (138) inclut un fil câblé enroulé hélicoïdalement comprenant des fils de polyamide aliphatique.

4. Pneu d'aéronef (100) selon la revendication 3, dans lequel le fil câblé enroulé hélicoïdalement forme un angle de 3 degrés ou moins depuis un plan équatorial du pneu.

5. Pneu d'aéronef (100) selon l'une quelconque des revendications 2 à 4, dans lequel la nappe de ceinture non hybride supplémentaire (138) est située radialement à l'extérieur des nappes hybrides (130, 132) et radialement à l'intérieur des autres nappes non hybrides (134, 136, 140).

6. Pneu d'aéronef (100) selon la revendication 5, dans lequel l'au moins une nappe de ceinture non hybride (134, 136, 140) consiste en deux nappes ayant des éléments de fil câblé enroulés sinusoïdalement.

7. Pneu d'aéronef (100) selon la revendication 6, dans lequel les éléments de fil câblé des nappes de ceinture hybrides (130, 132) forment un angle dans la plage de 28 degrés à 32 degrés depuis un plan équatorial du pneu.

8. Pneu d'aéronef (100) selon l'une quelconque des revendications 2 à 4, dans lequel l'au moins une nappe de ceinture non hybride (134, 136, 140) comprend au moins deux nappes ayant des éléments de fil câblé enroulés sinusoïdalement et dans lequel la nappe de ceinture non hybride supplémentaire (138) est située radialement entre lesdites deux nappes ayant des éléments de fil câblé enroulés sinusoïdalement.

9. Pneu d'aéronef (100) selon la revendication 8, dans lequel les éléments de fil câblé des nappes de ceinture hybrides (130, 132) forment un angle dans la plage de 18 degrés à 22 degrés depuis un plan équatorial du pneu.

10. Pneu d'aéronef (100) selon l'une quelconque des revendications précédentes, dans lequel la largeur de chacune des nappes de ceinture hybrides (130, 132) est dans la plage de 45 pour cent à 90 pour cent de la largeur de la nappe de ceinture non hybride la plus étroite.

11. Pneu d'aéronef (100) selon l'une quelconque des revendications précédentes, dans lequel la largeur de chacune des nappes de ceinture hybrides (130, 132) est dans la plage de 70 pour cent à 90 pour cent de la largeur de la nappe de ceinture non hybride la plus étroite.

12. Pneu d'aéronef (100) selon l'une quelconque des revendications précédentes, comprenant en outre au moins une nappe de protection (142) positionnée dans la partie de sommet (110) radialement vers l'extérieur de la structure de renforcement de ceinture (128) et radialement vers l'intérieur de la partie de bande de roulement.

13. Pneu d'aéronef (100) selon l'une quelconque des revendications précédentes, dans lequel les au moins deux nappes carcasses incluent chacune des éléments de fil câblé comprenant des fils de polyamide aliphatique et n'incluent pas de fils de polyamide aromatique.

14. Pneu d'aéronef (100) selon la revendication 13, dans lequel le pneu définit un plan méridien, et dans lequel les éléments de fil câblé des au moins deux nappes carcasses forment un angle de deux degrés ou moins depuis le plan méridien.

15. Pneu d'aéronef (100) selon l'une quelconque des revendications précédentes, dans lequel les éléments de fil câblé des au moins deux nappes de ceinture hybrides comprennent deux fils de filaments de polyamide aromatique et un fil de filaments de polyamide aliphatique.
